# EUROPÄISCHE PATENTSCHRIFT

(11) **EP 2 409 801 B1**
(45) Veröffentlichungstag und Bekanntmachung des Hinweises auf die Patenterteilung: **01.03.2017**
(21) Anmeldenummer: 10007542.3
(22) Anmeldetag: 21.07.2010
(51) Int. Cl.: B23C 5/10, B23C 5/20, B23C 5/22, B23C 5/06

(54) **Fräswerkzeug**
Machining tool
Outil de fraisage

(43) Veröffentlichungstag der Anmeldung: 25.01.2012
(73) Patentinhaber: KARL-HEINZ ARNOLD GmbH, 73760 Ostfildern (DE); Pokolm Frästechnik GmbH & Co. KG, 33428 Harsewinkel (DE)
(72) Erfinder: Meditz, Werner, 72574 Bad Urach (DE); Rahmlow, Sven, 33739 Bielefeld (DE)
(74) Vertreter: Patentanwälte Magenbauer & Kollegen Partnerschaft mbB

(56) Entgegenhaltungen:
- EP-A2- 0 489 702
- WO-A1-2009/157850
- DE-A1-102007 022 536
- DE-U1-202009 012 711
- FR-A- 1 245 148
- GB-A- 1 527 091
- US-A- 3 490 117
- US-A- 4 074 949
- US-A- 6 152 658
- US-A1- 2005 011 925

## Beschreibung

Die Erfindung betrifft ein Fräswerkzeug gemäß dem Oberbegriff des Anspruchs 1. Ein Fräswerkzeug dieser Art ist aus der WO 2009/157850 A bekannt.

Ein weiteres Fräswerkzeug dieser Art ist beispielsweise aus der DE 203 21 057 U1 bekannt. Dieses Fräswerkzeug besitzt einen Trägerkörper, an dem gleichmäßig über den Umfang verteilt mehrere, beispielsweise acht Plattensitze ausgebildet sind, die jeweils zur Befestigung einer Schneidplatte dienen. Die Schneidplatten sind untereinander gleich ausgebildet und werden mittels Klemmmitteln in einer definierten Einbaulage an den Plattensitzen befestigt. Die Schneidplatten sind als Wendeschneidplatten ausgestaltet und besitzen jeweils eine Grundfläche und eine Frontfläche, die formgleich und wendesymmetrisch zueinander ausgebildet sind. Es gibt insgesamt vier Umfangsschneidkanten, die gerade und parallel zueinander angeordnet sind. Die Wendeschneidplatten können jeweils in vier unterschiedlichen Einbaulagen eingebaut werden, wobei dann jeweils andere Schneidkantenpaare als aktive Schneidkanten zur spanabhebenden Bearbeitung dienen. In allen vier Einbaulagen ist jedoch der Anstellwinkel zwischen einer Senkrechten durch die Rotationsachse des Werkzeugträgers und der aktiven Schneidkante immer derselbe.

Aufgabe der Erfindung ist es, ein Fräswerkzeug der eingangs erwähnten Art zu schaffen, mit dem in einfacher Weise mit zwei unterschiedlichen Anstellwinkeln gearbeitet werden kann. Ferner ist es Aufgabe der Erfindung, eine Schneidplatte bereitzustellen, die für einen Einsatz in einem Fräswerkzeug geeignet ist, wodurch ,ohne Modifikationen am Fräswerkzeug selber vornehmen zu müssen, ein weiterer Anstellwinkel realisiert werden kann. Diese Aufgabe wird durch ein Fräswerkzeug mit den Merkmalen des unabhängigen Anspruches 1 gelöst. Weiterbildungen der Erfindung sind in den Unteransprüchen dargestellt.

Das erfindungsgemäße Fräswerkzeug zeichnet sich dadurch aus, dass es zusätzlich zu den ersten Schneidplatten zweite Schneidplatten aufweist, die alternativ zu den ersten Schneidplatten an den Plattensitzen festklemmbar sind, wobei die zweiten Schneidplatten jeweils einen Sockelabschnitt und einen mit wenigstens einer Schneidkante ausgestatteten Schneidenabschnitt besitzen, der derart mit einem Winkelversatz zu dem Sockelabschnitt ausgerichtet ist, dass die jeweilige zweite Schneidplatte in der gleichen definierten Einbaulage wie eine der ersten Schneidplatten jedoch mit gegenüber dem ersten Anstellwinkel der ersten Schneidplatte verschiedenen, zweiten Anstellwinkel am zugeordneten Plattensitz festklemmbar ist.

Werden die ersten Schneidplatten in der definierten Einbaulage an den zugeordneten Plattensitzen festgeklemmt, so ergibt sich ein erster Anstellwinkel, mit der die spanabhebende Bearbeitung des zu bearbeitenden Werkstücks durchgeführt wird. Da das Fräswerkzeug auch zweite Schneidplatten aufweist, ist es nun in einfacher Weise möglich, die ersten Schneidplatten durch die zweiten Schneidplatten zu ersetzen und damit in einfacher Weise eine Änderung des Anstellwinkels zu realisieren. Hierzu ist keine Modifikation am Fräswerkzeug selber notwendig, sondern die zweiten Schneidplatten werden in derselben Einbaulage wie die ersten Schneidplatten an den zugeordneten Plattensitzen festgeklemmt. Die Änderung des Anstellwinkels wird durch den Winkelversatz zwischen dem Schneidenabschnitt und dem Sockelabschnitt der jeweiligen zweiten Schneidplatte bewirkt.

Bei einer Weiterbildung der Erfindung beträgt der Winkelversatz zwischen dem Sockelabschnitt und dem Schneidenabschnitt der jeweiligen zweiten Schneidplatte 5° bis 20°, insbesondere 8° bis 12°.

Prinzipiell ist mit den ersten Schneidplatten ein erster Anstellwinkel und mit den zweiten Schneidplatten ein beliebiger zweiter Anstellwinkel realisierbar. Zweckmäßigerweise beträgt der erste Anstellwinkel bei den ersten Schneidplatten ca. 10°, während der zweite Anstellwinkel bei den zweiten Schneidplatten ca. 0° beträgt, wobei hier in der Fachterminologie von einem 90° Anstellwinkel gesprochen wird. Insbesondere die ersten Schneidplatten mit den Anstellwinkeln von jeweils 10° sind für das Hochgeschwindigkeitsfräsen, auch High Speed Cutting (HSC) genannt geeignet. In bevorzugter Weise sind die Schneidenabschnitte der ersten und zweiten Schneidplatten in der jeweils definierten Einbaulage der zugeordneten Sockelabschnitte frei von einer Anlage an die Gegen-Anlagefläche am Plattensitz ausgebildet. Dies kann beispielsweise durch Freistiche realisiert werden, die an die Gegen-Anlageflächen angrenzen.

In besonders bevorzugter Weise weisen erste und zweite Schneidplatten dieselbe Grundform von Sockelabschnitt und Schneidenabschnitt auf. Zweckmäßigerweise ist dies eine rechteckige Grundform. Zur Realisierung eines anderen Anstellwinkels ist es also nicht notwendig, Schneidplatten mit anderer Geometrie zu verwenden, sondern es kann derselbe Typ an Schneidplatten verwendet werden, so dass bei den zweiten Schneidplatten auf den ohnehin schon optimierten Sockelabschnitt der ersten Schneidplatten zurückgegriffen werden kann. Besonders bevorzugt sind also die Sockelabschnitte von erster und zweiter Schneidplatte identisch, zumindest was die Grundform und die Grundfläche betrifft.

Zweckmäßigerweise sind erste und zweite Schneidplatten jeweils als Pyramidenstumpf-Körper ausgestaltet.

In besonders bevorzugter Weise weisen die Schneidenabschnitte jeweils eine quadratische Grundform mit vier im Winkel von jeweils 90° zueinander ausgerichteten Schneidkanten auf.

Die Sockelabschnitte können ebenfalls quadratisch ausgebildet sein.

Bei einer Weiterbildung der Erfindung ist das Fräswerkzeug als Aufsteckfräser ausgebildet. In diesem Fall bildet der Trägerkörper einen sogenannten Messerkopf. Alternativ ist es jedoch auch möglich, dass das Fräswerkzeug als Schaftfräser, Monoblockfräser oder Einschraubfräser ausgebildet ist. Zweckmäßigerweise weisen erste und zweite Schneidplatten jeweils ein zu den Klemmmitteln gehörendes Klemmloch zur Durchführung eines Klemmelementes, insbesondere Klemmschraube, auf, wobei das Klemmloch eine Lochachse besitzt und der Schneidenabschnitt und der Sockelabschnitt einer jeweiligen ersten und zweiten Schneidplatte in Axialrichtung der Lochachse hintereinander angeordnet sind.

Beispielweise, weist die Schneidplatte für ein Fräswerkzeug einen rechteckigen Sockelabschnitt mit vier im Winkel von jeweils 90° zueinander ausgerichteten Sockelkanten auf, wobei der Sockelabschnitt wenigstens eine Anlagefläche besitzt, über die die Schneidplatte mittels Klemmmitteln an eine Gegen-Anlagefläche eines Plattensitzes eines Fräswerkzeugs in Anlage gedrückt und dort in definierter Einbaulage festklemmbar ist, wobei die Schneidplatte ferner einen mit dem Sockelabschnitt verbundenen quadratischen Schneidenabschnitt aufweist, der vier im Winkel von jeweils 90° zueinander ausgerichtete Schneidkanten besitzt, die jeweils mit einem Winkelversatz zu den Sockelkanten des Sockelabschnitts ausgerichtet sind.

Bei einer Weiterbildung schließen an derselben Seite der Schneidplatte liegende Sockelkanten und Schneidkanten jeweils einen Versatzwinkel von 5° bis 20°, insbesondere 8° bis 12° ein.

Ein bevorzugtes Ausführungsbeispiel der Erfindung ist in der Zeichnung dargestellt und wird im Folgenden näher erläutert. In der Zeichnung zeigen:
- Figur 1: ein bevorzugtes Ausführungsbeispiel des erfindungsgemäßen Fräswerkzeugs in Seitenansicht bestückt mit ersten Schneidplatten,
- Figur 2: eine Draufsicht auf das Fräswerkzeug von Figur 1,
- Figur 3: eine Seitenansicht des Fräswerkzeugs von Figur 1 bestückt mit zweiten Schneidplatten,
- Figur 4: eine Draufsicht auf das Fräswerkzeug von Figur 3,
- Figur 5: eine perspektivische Ansicht des Fräswerkzeugs von Figur 1 bestückt mit ersten Schneidplatten,
- Figur 6: eine Unteransicht des Fräswerkzeugs von Figur 5,
- Figur 7: eine perspektivische Ansicht des Fräswerkzeugs von Figur 3 bestückt mit zweiten Schneidplatten,
- Figur 8: ein Längsschnitt durch das Fräswerkzeug entlang der Linie VIII-VIII in Figur 4,
- Figur 9: eine perspektivische Ansicht einer ersten Schneidplatte,
- Figur 10: eine Seitenansicht der ersten Schneidplatte von Figur 9,
- Figur 11: eine Draufsicht auf den Schneidenabschnitt der ersten Schneidplatte von Figur 9,
- Figur 12: einen Längsschnitt durch die erste Schneidplatte entlang der Linie XII-XII in Figur 11,
- Figur 13: eine perspektivische Ansicht einer zweiten Schneidplatte,
- Figur 14: eine Seitenansicht der zweiten Schneidplatte von Figur 13,
- Figur 15: eine Draufsicht auf die zweite Schneidplatte von Figur 13 und
- Figur 16: einen Längsschnitt durch die zweite Schneidplatte von Figur 15 entlang der Linie XVI-XVI in Figur 14.

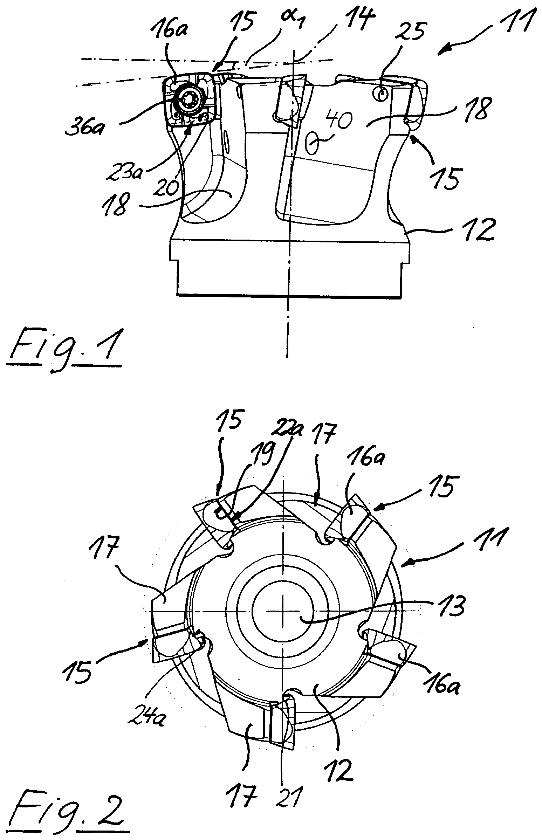

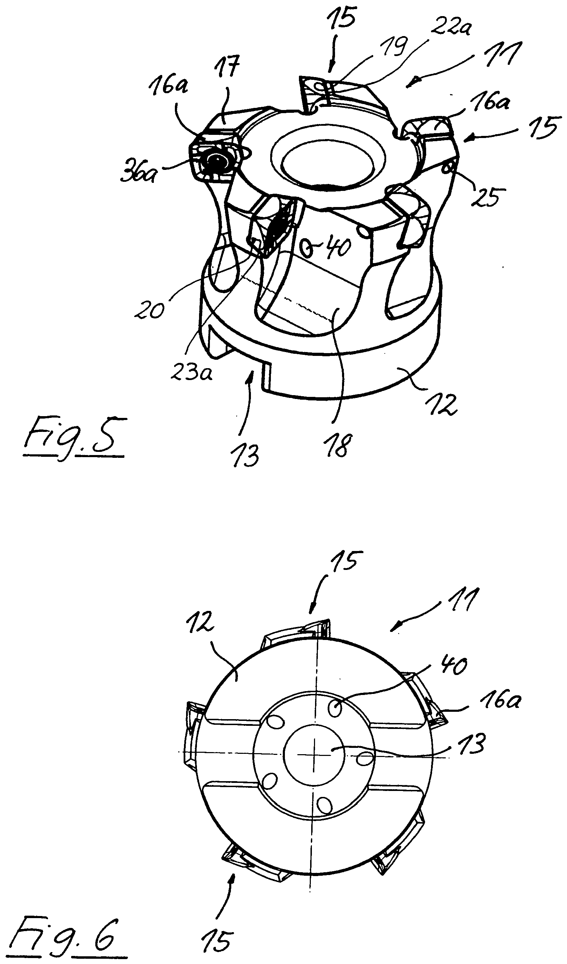

Die Figuren 1 bis 8 zeigen ein bevorzugtes Ausführungsbeispiel des erfindungsgemäßen Fräswerkzeugs 11. Das Fräswerkzeug ist hier beispielhaft in Form eines Aufsteckfräsers für das Plan- oder Eckfräsen von Werkstücken gezeigt. Es ist jedoch selbstverständlich möglich, die Erfindung auch auf einen Schaftfräser zu übertragen.

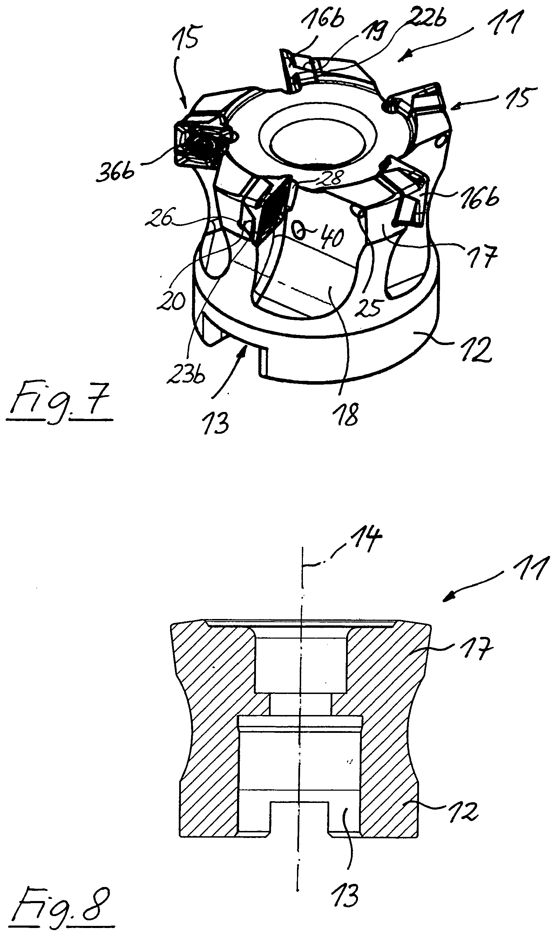

Das Fräswerkzeug 11 besitzt einen Trägerkörper 12, der wie in Figur 8 gezeigt, eine gestufte Durchbohrung 13 für die Adaptierung an die Spindel einer Werkzeugmaschine oder dergleichen aufweist. Dort wird das Fräswerkzeug beispielsweise mittels eines Spannfutters an der Werkzeugmaschinenspindel festgelegt und um eine Rotationsachse 14 rotatorisch beweglich angetrieben, womit eine spanabhebende Bearbeitung, insbesondere ein Plan- oder Eckfräsen, eines zu bearbeitenden Werkstücks möglich ist.

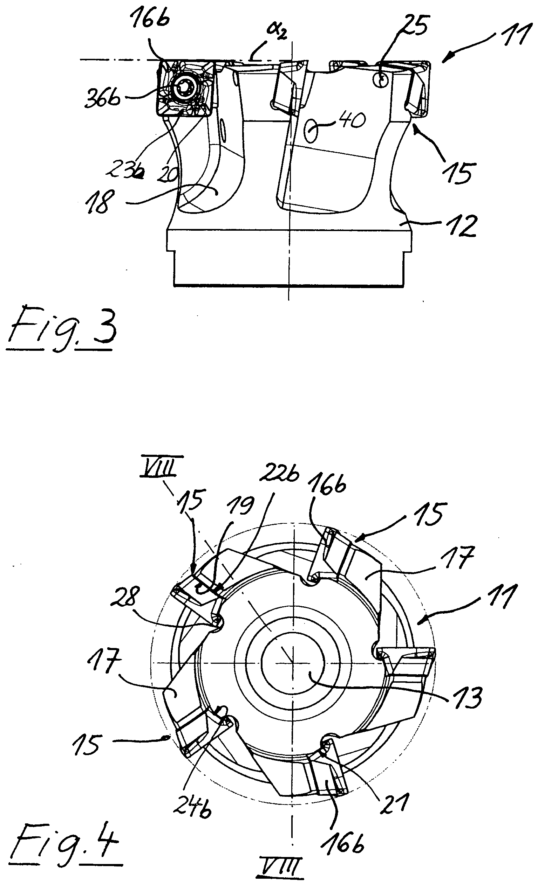

Der Trägerkörper 12 besitzt an seinem Umfang, über diesen verteilt angeordnet, mehrere Plattensitze 15 zur Aufnahme und Befestigung zugeordneter erster und zweiter Schneidplatten 16a, 16b. Wie insbesondere in den Figuren 2 und 4 dargestellt, sind über den Umfang verteilt, in regelmäßigen Abständen zueinander gelegen fünf Plattensitze 15 ausgebildet. Dies entspricht einer sogenannten normalen Teilung. Es ist jedoch auch möglich, eine enge Teilung mit über den Umfang verteilt acht Plattensitzen 15 zu realisieren. Die Plattensitze 15 sind jeweils an zahnartigen Vorsprüngen 17 ausgebildet, wobei zwischen jeweils benachbarten Vorsprüngen 17 keilartige Einschnitte ausgebildet sind, die jeweils in Axialrichtung zur Rotationsachse 14 verlaufende, bogenförmig gekrümmte Spanleitfläche 18 aufweisen. An den Spanleitflächen 18 mündet jeweils ein Kühlschmierstoffkanal 19 aus, über den Kühlschmierstoff in den Bereich der Schneidplatten 16a, 16b und auf die Spanleitfläche 18 tritt. Die Zuführung des Kühlschmierstoffs erfolgt über das Innere des Trägerkörpers 12, so dass hier von einer Innenkühlung gesprochen werden kann.

Die Plattensitze 15 am Trägerkörper 12 besitzen gemäß dem bevorzugten Ausführungsbeispiel jeweils drei Gegen-Anlageflächen 19, 20, 21, an denen Anlageflächen 22a, 22b, 23a, 23b und 24a, 24b an den ersten und zweiten Schneidplatten 16a, 16b zur Anlage kommen und dort mittels Klemmmitteln festgeklemmt werden. Von den Gegen-Anlageflächen 19, 20, 21 erstreckt sich eine erste Gegen-Anlagefläche 19 in radialer Richtung zur Rotationsachse 14 und wird durch zwei Geraden aufgespannt, von denen sich eine in radialer Richtung zur Rotationsachse 14 und die andere in axialer Richtung zur Rotationsachse erstreckt. Die zweite Gegen-Anlagefläche 20 ist schräg zur ersten Gegen-Anlagefläche ausgerichtet und wird durch eine Gerade aufgespannt, die radial zur Rotationsachse 14 verläuft und eine andere Gerade, die senkrecht zur ersten Gerade und schräg zur Rotationsachse verläuft. Insgesamt ist die zweite Gegen-Anlagefläche gegenüber der Senkrechten zur Rotationsachse angestellt, so dass sich bei Festklemmung einer nachfolgend noch näher beschriebenen ersten Schneidplatte 16a der erste Anstellwinkel (α1) einstellt. Schließlich ist noch die dritte Gegen-Anlagefläche 21 zu nennen, die sowohl schräg zur ersten als auch schräg zur zweiten Gegen-Anlagefläche 20 ausgebildet ist. Sie wird durch eine Gerade, die sich im Wesentlichen in Axialrichtung zur Rotationsachse 14 und eine Gerade, die sich im Wesentlichen senkrecht zur Rotationsachse 14 erstreckt, aufgespannt. An der ersten Gegen-Anlagefläche 19 mündet eine Gewindebohrung 25 aus, die sich in den Vorsprung 17, an dem der jeweilige Plattensitz 15 ausgebildet ist, hinein erstreckt. Zwischen der ersten und der zweiten Gegen-Anlagefläche 19, 20 erstreckt sich ein Freistich 26. Ein anderer Freistich (nicht dargestellt) erstreckt sich zwischen der zweiten und der dritten Gegen-Anlagefläche 20, 21. Schließlich sitzt am Übergang zwischen der dritten Gegen-Anlagefläche 21 und der Spanleitfläche 18 ein weiterer Freistich 28. Insgesamt bilden die Gegen-Anlageflächen 19, 20, 21 eine Art Aufnahmetasche für die ersten und zweiten Schneidplatten 16a, 16b.

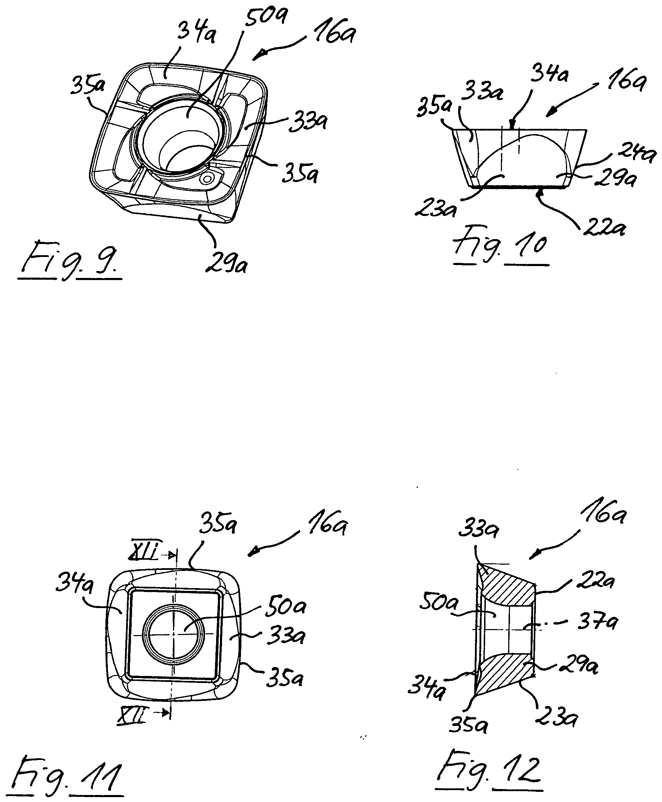

Die Figuren 9 bis 12 zeigen eine erste Schneidplatte 16a, die als Wendeschneidplatte ausgebildet ist. Insbesondere in Figur 10 gezeigt, besitzt die Schneidplatte 16a einen Sockelabschnitt 29a mit z.B. quadratischer Querschnittsfläche (Figur 11)auf. Diese quadratische Querschnittsfläche bildet die erste Anlagefläche 22a, die an die erste Gegen-Anlagefläche 19 in Anlage zu bringen ist. Insgesamt ist die erste Schneidplatte 16a als Pyramidenstumpf-Körper ausgestaltet, wobei sich der Sockelabschnitt 29a von der Querschnittsfläche bzw. Anlagefläche 22a weg trapezartig erweitert und übergangslos in einen Schneidenabschnitt 33a übergeht. Der Schneidenabschnitt 33a besitzt oberseitig eine Frontfläche 34. Die Mantelfläche des ersten Schneidplatten-Pyramidenstupfes bildet im Bereich des Sockelabschnitts 29a je nach Orientierung der Schneidplatte 16a zweite und dritte Anlageflächen 23a, 24a, die mit den komplementären Gegen-Anlageflächen 20, 21 am Trägerkörper 12 bzw. Plattensitz 15 in Anlage zu bringen sind. Am Übergang zwischen der Mantelfläche und der Frontfläche 34a befinden sich vier Schneidkanten 35a, von denen eine oder zwei Schneidkanten 35a als aktive Schneidkanten in Abhängigkeit von der Bearbeitungsaufgabe beim Betrieb des Fräswerkzeugs 11 spanabhebend tätig sind. Wie insbesondere in den Figuren 11 und 12 dargestellt, besitzt die erste Schneidplatte 16a ein Klemmloch 35a zur Durchführung eines Klemmelementes in Form einer Klemmschraube 36a. Das Klemmloch 50a besitzt eine Lochachse 37a, zu der Schneidenabschnitt 33a und Sockelabschnitt 29a in Axialrichtung hintereinander angeordnet sind. Als Klemmschraube 36a eignet sich insbesondere eine Zylinderschraube mit Senkkopf.

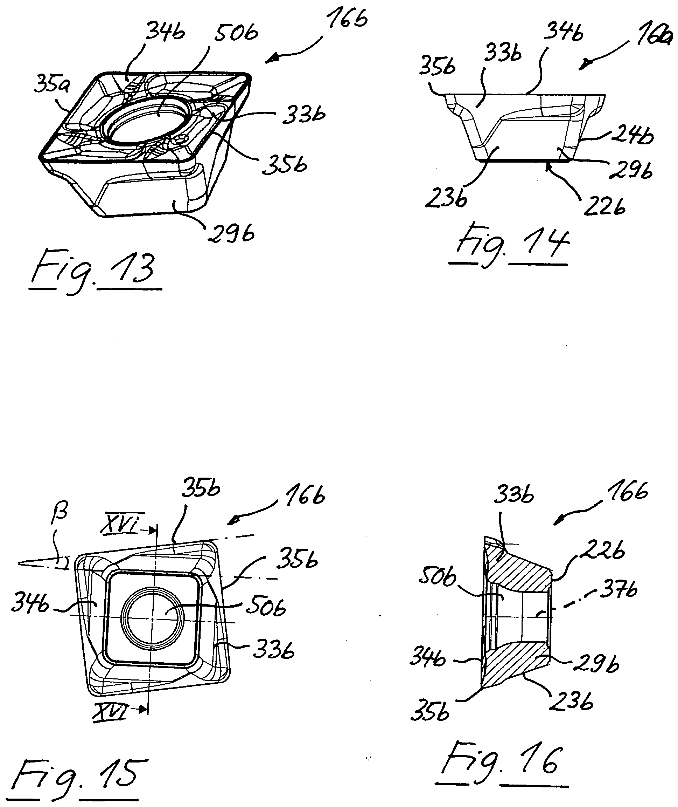

Die Figuren 13 bis 16 zeigen die zweite Schneidplatte 16b. Sie besitzt ebenfalls einen Sockelabschnitt 29b mit quadratischer Querschnittsfläche, die eine erste Anlagefläche 22b bildet, die an die Gegen-Anlagefläche 19 am Trägerkörper 12 in Anlage zu bringen ist. Auch die zweite Schneidplatte 16b ist als Pyramidenstumpf-Körper ausgestaltet, wobei die Mantelfläche des Sockelabschnitts 29b je nach Orientierung der zweiten Schneidplatte 16b in der definierten Einbaulage am zugeordneten Plattensitz 15 zweite und dritte Anlageflächen 23b, 24b bildet, die in Anlage zu den korrespondierenden Gegen-Anlageflächen 20, 21 am Trägerkörper 12 zu bringen sind. Im Gegensatz zur ersten Schneidplatte 16a ist bei der zweiten Schneidplatte 16b der Schneidenabschnitt 33b deutlich von dem Sockelabschnitt 29b abgesetzt. Dies wird durch einen Winkelversatz zwischen dem Sockelabschnitt 29b und dem Schneidenabschnitt 33b erreicht. Der Versatzwinkel β des Winkelversatzes beträgt ca. 8° bis ca. 12°.

Wie insbesondere in den Figuren 15 und 16 dargestellt, besitzt auch die zweite Schneidplatte 16b ein Klemmloch 50b zur Durchführung einer Klemmschraube 36b in Form einer zylindrischen Senkkopfschraube. Das Klemmloch 50b besitzt eine Lochachse 37b, wobei der Schneidenabschnitt 33b in Axialrichtung zur Lochachse 37b hinter dem Sockelabschnitt 29b angeordnet ist. Der Schneidenabschnitt 33b besitzt ebenfalls eine Frontfläche 34b, wobei am Übergang zwischen der Frontfläche 34b und den Mantelflächen vier Schneidkanten 35b ausgestaltet sind, die in Folge des ebenfalls quadratisch ausgestalteten Schneidenabschnitts 33b im Winkel von 90° zueinander angeordnet sind. Die zweite Schneidplatte 16b ist ebenfalls als Wendeschneidplatte ausgestaltet.

Bei der Bestückung des Trägerkörpers 12 mit den ersten Schneidplatten 16a, werden diese jeweils an den zugeordneten Plattensitz angesetzt. Dabei ist die Lochachse 37a des Klemmlochs 50a exzentrisch zur Bohrungsachse der Gewindebohrung 25, die an der ersten Gegen-Anlagefläche 19 ausmündet, ausgerichtet. Die Lochachse 37a befindet sich radial weiter außen und weiter oben als die Bohrungsachse der Gewindebohrung 25. Beim Einführen der Klemmschraube 36a wird die Schneidplatte 16a daher auch durch die Ausgestaltung des Schraubenkopfes als Senkkopf nach radial innen und unten gedrückt, wodurch die zweiten und dritten Anlageflächen 23a, 24a gegen die komplementären zweiten und dritten Gegen-Anlageflächen 20, 21 gepresst werden. Die erste Anlagefläche 22a liegt an die erste Gegen-Anlagefläche 19 an. Die dritte Gegen-Anlagefläche 21 ist mit einem Winkel von ca. 10° gegen die Senkrechte zur Rotationsachse 14 geneigt, wodurch sich ein erster Anstellwinkel α1 von ca. 10° ergibt. Die ersten Schneidplatten 16a sind also mit einem Anstellwinkel α1 von ca. 10° an den zugeordneten Plattensitzen 15 am Trägerkörper 12 festgeklemmt.

Mit dem erfindungsgemäßen Fräswerkzeug 11 lässt sich nunmehr in ganz einfacher Weise ein anderer Anstellwinkel α2, der vom Anstellwinkel α1 der ersten Schneidplatten 16a in Höhe von 10° verschieden ist, einstellen. Hierzu werden die ersten Schneidplatten 16a von dem Trägerkörper 12 entfernt und durch die zweite Schneidplatten 16b ersetzt. Die zweiten Schneidplatten 16b werden in genau derselben definierten Einbaulage an den zugeordneten Plattensitzen 15 festgeklemmt, d.h. durch das Einschrauben der Klemmschraube 36b werden die zweiten und dritten Anlageflächen 23b, 24b an die komplementären Gegen-Anlageflächen 20, 21 am Trägerkörper 12 gepresst. Es stellt sich dennoch ein anderer Anstellwinkel α2 von ca. 0°, der fachterminologisch als 90°-Anstellwinkel bezeichnet wird, ein, da die Schneidenabschnitte 33b der zweiten Schneidplatten 16b in einem Winkelversatz mit Versatzwinkel β von ca. 8° bis 12° zu dem Sockelabschnitt 29b ausgerichtet sind. Der Schneidenabschnitt 33b ist also quasi um ca. 8° bis 12° um die Lochachse 37b als Rotationsachse gegenüber dem Sockelabschnitt 29b in Uhrzeiger-Richtung verdreht. Durch diese Maßnahme ergibt sich der zweite Anstellwinkel α2.

Es ist also nicht notwendig, zur Realisierung eines anderen Anstellwinkels ganz andere Plattengeometrien oder andere Schneidplatten-Typen einzusetzen, sondern es kann derselbe Schneidplatten-Typ verwendet werden, jedoch mit der Variation, dass der Schneidenabschnitt 33b gegenüber dem Sockelabschnitt 29b mit einem Winkelversatz verdreht ist.

## Patentansprüche

1. Fräswerkzeug, insbesondere Plan- oder Eckfräser, mit einem eine Rotationsachse (10) aufweisenden Trägerkörper (12), der an seinem Umfang, über diesen verteilt angeordnet, mehrere Plattensitze (15) zur Aufnahme und Befestigung zugeordneter, zum Fräswerkzeug (11) gehörender erster Schneidplatten (16a) aufweist, die jeweils einen Sockelabschnitt (29a) mit wenigstens einer Anlagefläche (22, 23, 24) besitzen, der mittels Klemmmitteln an wenigstens eine Gegen-Anlagefläche (19, 20, 21) am zugeordneten Plattensitz (15) gedrückt und dort in einer definierten Einbaulage festgeklemmt ist, und einen mit dem Sockelabschnitt (29a) verbundenen Schneidenabschnitt (33a) mit wenigstens einer Schneidkante (35a) besitzen, die in der Einbaulage in einem ersten Anstellwinkel(α1) bezüglich einer Senkrechten zur Rotationsachse (14) in einer die Rotationsachse (14) umfassende Ebene ausgerichtet ist, wobei, das Fräswerkzeug (11) zusätzlich zu den ersten Schneidplatten (16a) zweite, ebenfalls zum Fräswerkzeug (11) gehörende Schneidplatten (16b) aufweist, die alternativ zu den ersten Schneidplatten (16a) an den Plattensitzen (15) festklemmbar sind, **dadurch gekennzeichnet, dass** die zweiten Schneidplatten (16b) jeweils einen Sockelabschnitt (29b) und einen mit wenigstens einer Schneidkante (35b) ausgestatten Schneidenabschnitt (33b) besitzen, der in der Einbaulage in einer die Rotationsachse (14) umfassende Ebene derart mit einem Winkelversatz zu dem Sockelabschnitt (29b) ausgerichtet ist, dass die jeweilige zweite Schneidplatte (16b) in der gleichen definierten Einbaulage wie eine der ersten Schneidplatten (16a) festklemmbar ist, wobei jedoch die wenigstens eine Schneidkante (35b) der zweiten Schneidplatte (16b) mit gegenüber dem ersten Anstellwinkel (α1) der ersten Schneidplatte (16a) verschiedenen, bezüglich einer Senkrechten zur Rotationsachse (14) in einer die Rotationsachse (14) umfassenden Ebene liegenden zweiten Anstellwinkel (α2) ausgerichtet ist.

2. Fräswerkzeug nach Anspruch 1, **dadurch gekennzeichnet, dass** der Winkelversatz zwischen dem Sockelabschnitt(29b) und dem Schneidenabschnitt (33b) der jeweiligen zweiten Schneidplatte (16b) 5° bis 20°, insbesondere 8° bis 12°, beträgt.

3. Fräswerkzeug nach Anspruch 1 oder 2, **dadurch gekennzeichnet, dass** der ersten Anstellwinkel (α1) der jeweiligen ersten Schneidplatte (16a) ca. 10° und der zweite Anstellwinkel (α2) der jeweiligen zweiten Schneidplatte ca. 0° beträgt.

4. Fräswerkzeug nach einem der vorhergehenden Ansprüche, **dadurch gekennzeichnet, dass** die Schneidenabschnitte (33a, 33b) der ersten und zweiten Schneidplatten (16a, 16b) in der jeweils definierten Einbaulage der zugeordneten Sockelabschnitte (29a, 29b) frei von einer Anlage an wenigstens eine der Gegen-Anlageflächen am Plattensitz (15) ausgebildet sind.

5. Fräswerkzeug nach einem der vorhergehenden Ansprüche, **dadurch gekennzeichnet, dass** erste und zweite Schneidplatten dieselbe, insbesondere rechteckige Grundform von Sockelabschnitt (29a, 29b) und Schneidenabschnitt (33a, 33b) aufweisen.

6. Fräswerkzeug nach einem der vorhergehenden Ansprüche, **dadurch gekennzeichnet, dass** erste und zweite Schneidplatten (16a, 16b) jeweils als Pyramidenstumpf-Körper ausgestaltet sind.

7. Fräswerkzeug nach Anspruch 5 oder 6, **dadurch gekennzeichnet, dass** die Schneidenabschnitte (33a, 33b) jeweils eine quadratische Grundform mit vier im Winkel von jeweils 90° zueinander ausgerichteten Schneidkanten (35a, 35b) aufweisen.

8. Fräswerkzeug nach einem der Ansprüche 5 bis 7, **dadurch gekennzeichnet, dass** die Sockelabschnitte (29a, 29b).eine quadratische Grundform besitzen.

9. Fräswerkzeug nach einem der vorhergehenden Ansprüche, **dadurch gekennzeichnet, dass** es als Aufsteckfräser ausgebildet ist.

10. Fräswerkzeug nach einem der vorhergehenden Ansprüche, **dadurch gekennzeichnet, dass** erste und zweite Schneidplatten (16a, 16b) jeweils ein zu den Klemnmitteln gehörendes Klemmloch (35a, 35b) zur Durchführung eines Klemmelementes, insbesondere Klemmschraube (36a, 36b), aufweisen, wobei das Klemmloch (35a, 35b) eine Lochachse (37a, 37b) besitzt und der Schneidenabschnitt (33a, 33b) und der Sockelabschnitt (29a, 29b) einer jeweiligen ersten oder zweiten Schneidplatte (16a, 16b) in Axialrichtung der Lochachse (37a, 37b) hintereinander angeordnet sind.

## Claims

1. Milling tool, in particular face-milling cutter or comer miller, with a support body (12) having a rotation axis (10) and with several insert pockets (15) distributed over its periphery for the holding and fixing of assigned first cutting edges (16a) belonging to the milling tool (11), each having a base section (29a) with at least one mounting surface (22, 23, 24) which is pressed by clamping means on to at least one counter mounting surface (19, 20, 21) on the insert pocket (15) and is there firmly clamped in a defined installed position, and having a cutting edge section (33a) connected to the base section (29a) and with at least one cutting edge (35a) which, in the installed position, is aligned in a first setting angle (α1) relative to a vertical to the rotation axis (14) in a plane including the rotation axis (14), wherein the milling tool (11) has, in addition to the first cutting edges (16a), second cutting edges (16b) likewise belonging to the milling tool (11), which may be clamped to the insert pockets (15) alternatively to the first cutting edges (16a), **characterised in that** the second cutting edges (16b) each have a base section (29b) and a cutting edge section (33b) equipped with at least one cutting edge (35b) which, in the installed position in a plane including the rotation axis (14) is so aligned to the base section (29b) with an angular offset, that the respective second cutting edge (16b) may be clamped in the same defined installed position as one of the first cutting edges (16a), wherein however the cutting edge or edges (35b) of the second cutting edge (16b) is or are aligned with respect to the first setting angle(α1) of the first cutting edges (16a) with different second setting angles (α2) lying relative to a vertical of the rotation axis (14) lying in a plane including the rotation axis (14).

2. Milling tool according to claim 1, **characterised in that** the angular offset between the base section (29ab) and the cutting edge section (33b) of the respective second cutting edge (16b) is 5° to 20°, in particular 8° to 12°.

3. Milling tool according to claim 1 or 2, **characterised in that** first setting angle (α1) of the respective first cutting edge (16a) and the second setting angle (α2) of the respective second cutting edge are approximately 0°.

4. Milling tool according to any of the preceding claims, **characterised in that** the cutting edge sections (33a, 33b) of the first and second cutting edges (16a, 16b) in the respectively defined installed position of the assigned base sections (29a, 29b) are free from contact with at least one of the counter mounting surfaces on the insert pocket (15).

5. Milling tool according to any of the preceding claims, **characterised in that** first and second cutting edges have the same, in particular rectangular, basic form of base section (29a, 29b) and cutting edge section (33a, 33b).

6. Milling tool according to any of the preceding claims, **characterised in that** first and second cutting edges are each in the form of truncated pyramid bodies.

7. Milling tool according to claim 5 or 6, **characterised in that** the cutting edge sections (33a, 33b) each have a square basic form with four cutting edges (35a, 35b) each aligned at angles of 90° relative to one another.

8. Milling tool according to any of claims 5 to 7, **characterised in that** each of the base sections (29a, 29b) has a square basic form.

9. Milling tool according to any of the preceding claims, **characterised in that** it is in the form of an arbour milling cutter.

10. Milling tool according to any of the preceding claims, **characterised in that** first and second cutting edges (16a, 16b) each have a clamping hole (35a, 35b) belonging to the clamping means for feeding through a clamping element, in particular a clamping bolt (36a, 36b), wherein the clamping hole (35a, 35b) has a hole axis (37a, 37b), and the cutting edge section (33a, 33b) and the base section (29a, 29b) of each first or second cutting edge (16a, 16b) are arranged consecutively in the axial direction of the hole axis (37a, 37b).

## Revendications

1. Outil de fraisage, en particulier fraise à surfacer ou fraise à dresser, avec un corps de support (12) présentant un axe de rotation (10), qui présente, au niveau de sa périphérie, disposés de manière répartie sur cette dernière, plusieurs logements de plaque (15) servant à recevoir et à fixer des premières plaques de découpe (16a) associées appartenant à l'outil de fraisage (11), lesquelles plaques de découpe possèdent respectivement un tronçon de socle (29a) avec au moins une surface d'appui (22, 23, 24), lequel est pressé, au moyen de moyens de serrage, contre au moins une surface d'appui complémentaire (19, 20, 21) au niveau du logement de plaque (15) associé et y est bloqué par serrage dans une position de montage définie, et qui possèdent un tronçon de découpe (33a) relié au tronçon de socle (29a), avec au moins une arête de découpe (35a), qui est orientée, dans la position de montage, selon un premier angle d'incidence (α1) par rapport à une perpendiculaire par rapport à l'axe de rotation (14) dans un plan comprenant l'axe de rotation (14), dans lequel l'outil de fraisage (11) présente, en supplément des premières plaques de découpe (16a), des deuxièmes plaques de découpe (16b) appartenant également à l'outil de fraisage (11), lesquelles peuvent être bloquées par serrage, en variante par rapport aux premières plaques de découpe (16a), au niveau des logements de plaque (15), **caractérisé en ce que** les deuxièmes plaques de découpe (16b) possèdent respectivement un tronçon de socle (29b) et un tronçon de découpe (33b) équipé d'au moins une arête de découpe (35b), lequel est orienté, dans la position de montage, dans un plan comprenant l'axe de rotation (14), de telle manière avec un décalage angulaire par rapport au tronçon de socle (29b) que la deuxième plaque de découpe (16b) respective peut être bloquée par serrage dans la même position de montage définie qu'une des premières plaques de découpe (16a), dans lequel toutefois l'au moins une arête de découpe (35b) de la deuxième plaque de découpe (16b) est orientée selon un deuxième angle d'incidence (α2) différent par rapport au premier angle d'incidence (α1) de la première plaque de découpe (16a), situé, par rapport à une perpendiculaire par rapport à l'axe de rotation (14), dans un plan comprenant l'axe de rotation (14).

2. Outil de fraisage selon la revendication 1, **caractérisé en ce que** le décalage angulaire entre le tronçon de socle (29b) et le tronçon de découpe (33b) de la deuxième plaque de découpe (16b) respective est de 5° à 20°, en particulier de 8° à 12°.

3. Outil de fraisage selon la revendication 1 ou 2, **caractérisé en ce que** le premier angle d'incidence (α1) de la première plaque de découpe (16a) respective est d'environ 10°, et le deuxième angle d'incidence (α2) de la deuxième plaque de découpe respective est d'environ 0°.

4. Outil de fraisage selon l'une quelconque des revendications précédentes, **caractérisé en ce que** les tronçons de découpe (33a, 33b) des premières et deuxièmes plaques de découpe (16a, 16b) sont réalisés, dans la position de montage définie respectivement des tronçons de socle (29a, 29b) associés, sans un appui contre au moins une des surfaces d'appui complémentaires au niveau du logement de plaque (15).

5. Outil de fraisage selon l'une quelconque des revendications précédentes, **caractérisé en ce que** des premières et deuxièmes plaques de découpe présentent une forme de base identique, en particulier rectangulaire, de tronçon de socle (29a, 29b) et de tronçon de découpe (33a, 33b).

6. Outil de fraisage selon l'une quelconque des revendications précédentes, **caractérisé en ce que** des premières et deuxièmes plaques de découpes (16a, 16b) sont configurées respectivement sous la forme de corps en tronc de pyramide.

7. Outil de fraisage selon la revendication 5 ou 6, **caractérisé en ce que** les tronçons de découpe (33a, 33b) présentent respectivement une forme de base carrée avec quatre arêtes de découpe (35a, 35b) orientées les unes par rapport aux autres selon un angle de respectivement 90°.

8. Outil de fraisage selon l'une quelconque des revendications 5 à 7, **caractérisé en ce que** les tronçons de socle (29a, 29b) possèdent une forme de base carrée.

9. Outil de fraisage selon l'une quelconque des revendications précédentes, **caractérisé en ce qu'**il est réalisé sous la forme d'une fraise à emboîter.

10. Outil de fraisage selon l'une quelconque des revendications précédentes, **caractérisé en ce que** des premières et des deuxièmes plaques de découpe (16a, 16b) présentent respectivement un trou de serrage (35a, 35b) appartenant aux moyens de serrage, servant à faire passer un élément de serrage, en particulier une vis de serrage (36a, 36b), dans lequel le trou de serrage (35a, 35b) possède un axe de trou (37a, 37b) et le tronçon de découpe (33a, 33b) et le tronçon de socle (29a, 29b) de respectivement une première ou une deuxième plaque de découpe (16a, 16b) sont disposés l'un derrière l'autre dans la direction axiale de l'axe de trou (37a, 37b).
